# NEUE EUROPÄISCHE PATENTSCHRIFT

(11) **EP 1 464 865 B2**
(45) Veröffentlichungstag und Bekanntmachung des Hinweises auf die Entscheidung über den Einspruch: **14.10.2009**
(45) Hinweis auf die Patenterteilung: 26.10.2005
(21) Anmeldenummer: 03029508.3
(22) Anmeldetag: 20.12.2003
(51) Int. Cl.: F16F 9/04, B60G 15/12, B60G 17/052

(54) **Pneumatische Feder-Dämpfungs-Einheit**
Pneumatic spring-damper unit
Unité ressort-amortisseur pneumatique

(30) Priorität: 01.04.2003 DE 10314621
(43) Veröffentlichungstag der Anmeldung: 06.10.2004
(73) Patentinhaber: Carl Freudenberg KG, 69469 Weinheim (DE)
(72) Erfinder: Böcking, Jörg, Dr., 64653 Lorsch (DE); Pelz, Peter, Dr., 22769 Hamburg (DE); Jaschke, Heinz-Günter, 21077 Hamburg (DE); von Broock, Ulrich, Dr., 21077 Hamburg (DE)

(56) Entgegenhaltungen:
- WO-A-02/070918
- DE-A- 3 641 623
- DE-A1- 10 110 321
- DE-C1- 19 940 198
- DE-U- 8 413 300
- GB-A- 205 880
- US-A- 2 984 475
- US-A- 6 161 821

## Beschreibung

Die Erfindung betrifft eine pneumatische Feder-Dämpfer-Einheit, insbesondere für Kraftfahrzeuge mit einem Federraum und Dämpferräumen, wobei der Federraum im Wesentlichen durch einen Rollbalg gebildet ist und die Dämpferräume innerhalb eines zylindrischen Gehäuses untergebracht sind, in dem ein mit Ventilen oder Drosseln versehener Kolben angeordnet ist.

Bei einer Betrachtung eines Fahrzeugs als schwingungsfähiges System können zwei träge Massen unterschieden werden: die Aufbaumasse und die Achsmasse. Die Schwingungsanregung erfolgt über die Straße. Sobald das Fahrzeug über eine Bodenwelle fährt, teilt sich die Bewegung der Achsmasse über den luftgefüllten Reifen mit. Die Achsmasse ihrerseits ist über ein Federbein mit dem Aufbau verbunden und die Wirkung der Bodenwelle wird in den Aufbau weitergeleitet. Insgesamt schwingt folglich die Achse und der Aufbau. Vom Fahrzeuginsassen werden insbesondere Schwingungen im Bereich zwischen 4 und 8 Hz als unangenehme empfunden. Schwingungsfrequenzen >20 Hz sind hörbar und werden deshalb ebenfalls als störend angesehen. Durch eine geeignete Wahl der Steifigkeiten von Reifen und Federbeinen wird das Fahrzeug derart abgestimmt, dass die der großen Aufbaumasse zugeordnete Aufbaueigenfrequenz zwischen 1,0 Hz und 1,8 Hz zu liegen kommt. Die Achseigenfrequenz ihrerseits liegt üblicherweise zwischen 10 Hz und 14 Hz.

Bei Anregungsfrequenzen, die kleiner als die Aufbaueigenfrequenz ist, d.h. <1 Hz, folgt das Fahrzeug unmittelbar den Bodenwellen. Die vertikale Fahrzeugbewegung ist parallel zum Straßenprofil. Bei Anregungsfrequenzen im Bereich der Aufbaueigenfrequenz, also zwischen 1,0 Hz und 1,8 Hz ist die Hubbewegung des Fahrzeugs größer als die Höhe der Bodenwelle. Hier entsteht eine Resonanzüberhöhung. Bei Frequenzen größer als der Aufbaueigenfrequenz wird die Hubbewegung des Fahrzeugs zunächst kleiner. Erst bei Frequenzen im Bereich der Achseigenfrequenz, d.h. 10 bis 14 Hz entsteht wieder ein Schwingungsmaximum. Hier kommt die Achse in eine Resonanzschwingung und durch die Achsbewegung wird der Aufbau mitbewegt.

Für die Dämpfung der Schwingungen werden sowohl hydraulische Dämpfer als auch pneumatische Dämpfer eingesetzt. Die üblichen Luftdämpfer haben zwei Gasvolumina, die durch einen Ventilkolben voneinander getrennt sind. Das eine Gasvolumen ist im Federraum untergebracht, welcher im Wesentlichen durch einen Rollbalg gebildet wird. Das andere Gasvolumen befindet sich im Dämpferraum, der meist innerhalb eines zylindrischen Gehäuses untergebracht ist, in dem der die Volumina trennende Kolben sich hin- und herbewegen kann. Während des Federungsvorgangs erfolgt die Dämpfwirkung dadurch, dass die Luft durch wenigstens eine Drosselbohrung oder ein Drosselventil durch die Kolbenplatte gedrückt wird. Bei hohen Frequenzen wird während eines Schwingspiels der Luft jedoch zu wenig Zeit gegeben, um von einem Volumen in das andere strömen zu können. Das hat zur Folge, dass ein pneumatischer Dämpfer bei Frequenzen oberhalb des Dämpfungsfrequenzbandes nicht mehr dämpft. Die entstehende Dämpfungskurve, bei der die Dämpfungsarbeit in J (Joule) über der Frequenz in Hz aufgezeichnet wird, hat ein deutliches Dämpfungsmaximum. Bis zu diesem Maximum steigt sie relativ steil an und fällt nach dem Maximum wieder steil ab. Bei der Ausführung von Luftdämpfern ist man deshalb gezwungen, einen Kompromiss zwischen der Aufbaudämpfung und der Achsbedämpfung zu wählen, um die beiden typischen Schwingungsfrequenzen zu erfassen.

### Stand der Technik

In der DE 36 41 623 C2 ist eine pneumatische Feder-Dämpfer-Einheit gezeigt mit einem Gehäuse, in dem ein Kolben geführt ist, dessen Kolbenstange in einen Rollbalg hineinreicht. Die Kolbenplatte ist mit Drosseln versehen, die bei einer Bewegung des Kolbens eine vorbestimmte Menge an Luft hindurch lassen. Dieser Luftdämpfer hat alle Merkmale der üblicherweise eingesetzten Dämpfer. In der Abstimmfrequenz erhält die Dämpfungsarbeit ein Maximum.

Eine andere Möglichkeit der Ausbildung einer pneumatischen Feder-Dämpfer-Einheit ist dem Gebrauchsmuster DE 84 13 300 U zu entnehmen. Dort wird zusätzlich am zylindrischen Gehäuse für den Kolben ein Boden angebracht, welcher den vom Rollbalg eingefassten Federraum von dem Gehäuseinnenraum trennt. Der Innenraum des Gehäuses ist seinerseits in zwei Dämpferräume unterteilt und der Kolben ist mit Drosseln versehen für den Luftdurchlass bei der Bewegung des Kolbens in der einen oder anderen Richtung. Auch diese Ausbildung des Luftdämpfers ergibt ein Dämpfungsarbeitsdiagramm, das mit einem deutlichen Maximum ausgestattet ist. D.h. auch, dieser Luftdämpfer stellt ein Kompromiss zwischen der Aufbaubedämpfung und der Achsbedämpfung dar.

### Darstellung der Erfindung

Der Erfindung liegt die Aufgabe zugrunde, einen verbesserten Luftdämpfer zu schaffen, mit dem eine bessere Bedämpfung sowohl der Aufbaueigenfrequenz als auch der Achseigenfrequenz möglich ist. Dabei soll der Luftdämpfer einen möglichst einfachen Aufbau haben und kostengünstig herstellbar sein.

Die Lösung der gestellten Aufgabe wird bei einer pneumatischen Feder-Dämpfer-Einheit der eingangs genannten Art erfindungsgemäß dadurch die Merkmale des Anspruchs 1 erreicht. Mindestens an einen Dämpferraum ist ein zusätzlicher Nebenraum mit konstantem Gasvolumen angeschlossen wird, wobei der Dämpferraum und der Nebenraum über Drosselbohrungen und/oder Drosselventilkanäle miteinander kommunizieren.

Es zeigte sich, dass bei einer dem jeweiligen Fahrzeugtyp angepassten Geometrie des Luftdämpfers sowie entsprechende Ausbildung der Drosselbohrungen bzw. Drosselventile eine Dämpfungsarbeit erreicht werden kann, welche einen Kurvenverlauf hat, der zwei Maxima aufweist. Bei entsprechender Ausgestaltung der Feder-Dämpfer-Einheit können diese Maxima auf die Aufbaueigenfrequenz und die Achseigenfrequenz abgestimmt werden, so dass hier die größte Dämpfung eintritt. Aufbau und Achse können so getrennt voneinander bedämpft werden und der Komfortgewinn bei hohen Frequenzen bleibt erhalten. Die Schalleinleitung in den Fahrgastraum ist deutlich reduziert.

Erfindungsgemäß sind der Dämpferraum und der Nebenraum im Gehäuse nebeneinander angeordnet sind. Dies wird bevorzugt dadurch erreicht, dass der Nebenraum vom Dämpferraum durch eine mit Drosselbohrungen und/oder Drosselventilen versehene Platte getrennt wird.

Eine besonders günstige Ausführungsform entsteht dann, wenn der Federraum und der Dämpferraum durch einen mit Drosselbohrungen und/oder Drosselventilen versehenen Boden noch zusätzlich voneinander getrennt werden.

### Kurzbeschreibung der Zeichnungen

Anhand der in der Zeichnung dargestellten Ausführungsbeispiele wird die Erfindung nachstehend näher erläutert:

Es zeigt
- Fig. 1: schematisch einen Luftdämpfer mit Dämpfer- und Nebenraum für Luftvolumina;
- Fig. 2: ein Diagramm, in dem die Dämpferarbeit in Nm über der Frequenz in Hz aufgezeichnet wurde und
- Fig. 3: schematisch einen Dämpfer, bei dem der Federraum des Rollbalgs vom Dämpferraum durch einen Boden getrennt ist.

### Ausführung der Erfindung

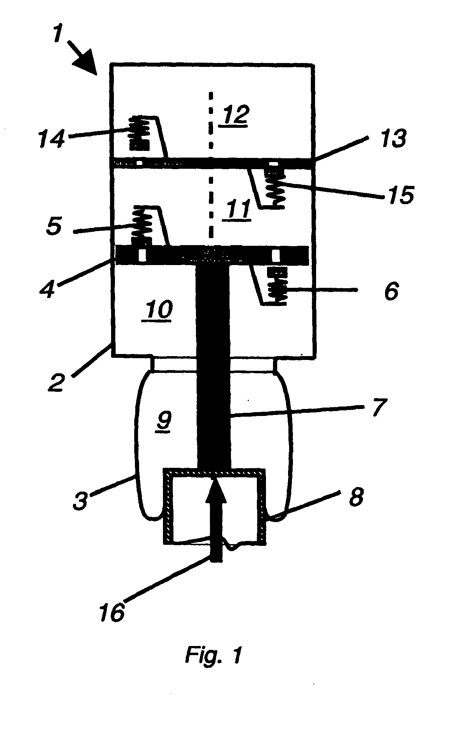

Die in der Fig. 1 dargestellte pneumatischen Feder-Dämpfer-Einheit 1 hat das Gehäuse 2, an welches der Rollbalg 3 anschließt. Im Gehäuse 2 wird der Kolben 4 geführt. Der Kolben 4 hat die Form einer Kolbenplatte, in der die Drosselventile 5 und 6 angebracht sind. Die Kolbenstange 7 ist ihrerseits über den Anschluss 8 mit dem Rollbalg 3 verbunden. Der Innenraum 9 des Rollbalgs 3 stellt den Federraum dar, während im Inneren des Gehäuses 2 die Dämpferräume 10 und 11 untergebracht sind. Zusätzlich zu den Dämpferräumen 10, 11 ist in Gehäuse 2 der Nebenraum 12 untergebracht. Der Nebenraum 12 ist durch die feststehende Platte 13 vom Dämpferraum 11 getrennt. Die Platte 13 ist fest eingesetzt, so dass das Luftvolumen des Nebenraums 12 konstant ist. Die Platte 13 ist mit den Drosselventilen 14 und 15 versehen, durch die je nach dem herrschenden Druck im Nebenraum 12 bzw. Dämpfungsraum 11 Luft hindurchtreten kann. Durch den Pfeil 16 ist angedeutet, dass eine Einfederung stattfindet, so dass der Kolben 4 sich nach oben bewegt. Der Druck im Dämpferraum 11 steigt an und der Luftdruck im Dämpferraum 10 und im Federraum 9 verringert sich. Bei niedrigen Frequenzen öffnet das Drosselventil 14 zum Nebenraum 12 und es erfolgt eine Bedämpfung der niedrigeren Frequenz, d.h. der Aufbaueigenfrequenz. Bei höheren Frequenzen öffnet zusätzlich das Ventil 6 und es erfolgt eine Bedämpfung der höheren Frequenzen, d.h. der Achseigenfrequenz. Je nach Richtung des Pfeils 16 werden die Ventile 14 und 15 bzw. 5 und 6 geöffnet bzw. verschlossen.

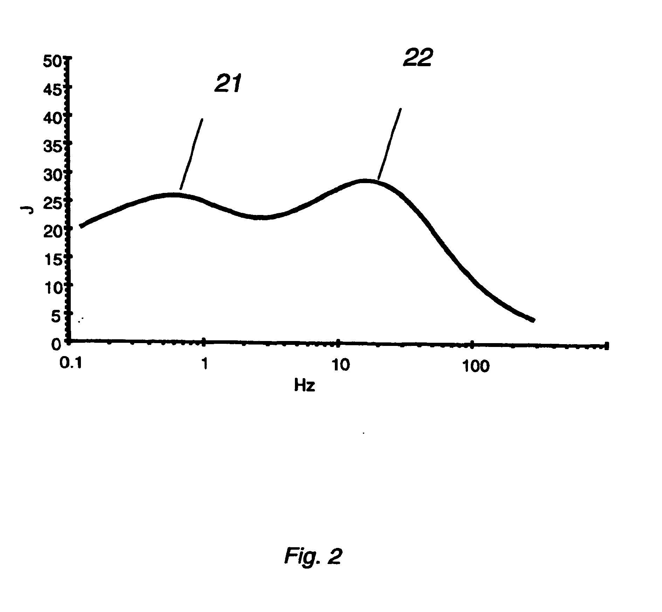

In der Fig. 2 gibt die Kurve 20 den Verlauf der Dämpfarbeit, gemessen in J, über der Frequenz in Hz wieder. Die Kurve 20 hat zwei Maxima 21 und 22, wobei das Maximum 21 in den Bereich der Aufbaueigenfrequenz gelegt ist, während das Maximum 22 den Bereich der Achseigenfrequenz in der Größenordnung von 15 Hz abdeckt.

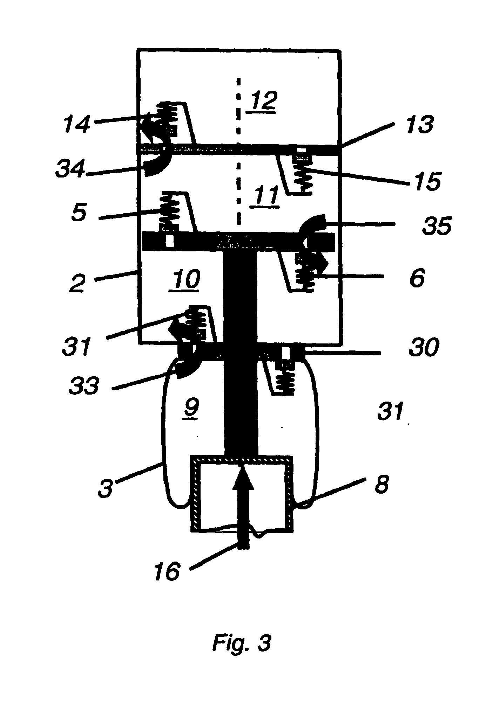

In der Fig. 3 ist ein Ausführungsbeispiel gezeigt, bei dem prinzipiell der gleiche Aufbau der Feder-Dämpfer-Einheit 1, wie in Fig. 1 beibehalten ist, jedoch wurde zusätzlich zwischen dem Dämpferraum 10 des Gehäuses 2 und dem Rollbalg 3 ein Trennboden 30 eingesetzt. Der Trennboden 30 ist in gleicher Weise wie der Kolben 4 bzw. die Platte 13 mit den Drosselventilen 31 und 32 versehen. Bei einem Einfederungsvorgang, wie bereits zu Fig. 1 geschildert, wird Luft aus dem Federraum 9 über das Ventil 31 in den Dämpferraum 10 gedrückt. Durch die nach oben gerichtete Bewegung des Kolbens 4 entsteht im Dämpferraum 11 ein Überdruck, so dass Luft aus dem Dämpferraum 11 in den Nebenraum 12 gedrückt wird, gleichzeitig wird aber auch Luft aus dem Dämpferraum 11 über das Drosselventil 6 in den Dämpferraum 10 geleitet. Die Luftbewegungen sind durch die Pfeile 33, 34 und 35 angedeutet. Bei einem Ausfedern bewegt sich der Kolben 4 nach unten und die Strömungsrichtung der Luft erfolgt über die Ventile 32, 5 und 15 in umgekehrter Richtung. Mit dieser Ausbildung des Luftdämpfers können weitere Verbesserungen im Verlauf der Dämpfarbeitskurven bzw. Steifigkeitskurven erreicht werden.

## Patentansprüche

1. Pneumatische Feder-Dämpfer-Einheit, insbesondere für Kraftfahrzeuge, mit einem Federraum und Dämpferräumen, wobei der Federraum im Wesentlichen durch einen Rollbalg gebildet ist und die Dämpferräume innerhalb eines zylindrischen Gehäuses untergebracht sind, in dem ein mit Ventilen oder Drosseln versehener Kolben angeordnet ist, **dadurch gekennzeichnet, dass** mindestens an einem der Dämpferräume (11) ein zusätzlicher Nebenraum (12) mit konstantem Gasvolumen angeordnet ist, wobei der Dämpferraum (11) und der Nebenraum (12) im Gehäuse (2) nebeneinander angeordnet sind und über Drosselbohrungen und/oder Drosselventile (14, 15) miteinander kommunizieren.

2. Pneumatische Feder-Dämpfer-Einheit nach Anspruch 1, **dadurch gekennzeichnet, dass** der Nebenraum (12) vom Dämpferraum (11) durch eine mit Drosselbohrungen und/oder Drosselventilen (14, 15) versehene Platte (13) getrennt ist.

3. Pneumatische Feder-Dämpfer-Einheit nach Anspruch 1 oder 2, **dadurch gekennzeichnet, dass** der Federraum (9) von dem Dämpferraum (10) durch einen mit Drosselbohrungen und/oder Drosselventilen (31, 32) versehenen Trennboden (30) voneinander getrennt sind.

## Claims

1. Pneumatic spring/damper unit, in particular for motor vehicles, with a spring space and damper spaces, the spring space being formed essentially by a concertina, and the damper spaces being accommodated within a cylindrical housing in which a piston provided with valves or throttles is arranged, **characterized in that** an additional secondary space (12) having a constant gas volume is connected at least to one of the damper spaces (11), the damper space (11) and the secondary space (12) being arranged next to one another in the housing (2) and communicating with one another via throttle bores and/or throttle valves (14, 15).

2. Pneumatic spring/damper unit according to Claim 1, **characterized in that** the secondary space (12) is separated from the damper space (11) by a plate (13) provided with throttle bores and/or throttle valves (14, 15).

3. Pneumatic spring/damper unit according to Claim 1 or 2, **characterized in that** the spring space (9) and the damper space (10) are separated from one another by a separating bottom (30) provided with throttle bores and/or throttle valves (31, 32).

## Revendications

1. Unité ressort-amortisseur pneumatique, en particulier pour des véhicules automobiles, avec une chambre de ressort et des chambres d'amortisseur, dans laquelle la chambre de ressort est essentiellement formée par un soufflet roulant et les chambres d'amortisseur sont installées à l'intérieur d'un boîtier cylindrique, dans lequel est disposé un piston pourvu de soupapes ou d'étrangleurs, **caractérisée en ce qu'**une chambre annexe supplémentaire (12) à volume de gaz constant est raccordée à au moins une des chambres d'amortisseur (11), la chambre d'amortisseur (11) et la chambre annexe (12) étant disposées l'une à côté de l'autre dans le boîtier (2) et communiquant l'une avec l'autre par l'intermédiaire d'orifices d'étranglement et/ou de soupapes d'étranglement (14, 15).

2. Unité ressort-amortisseur pneumatique selon la revendication 1, **caractérisée en ce que** la chambre annexe (12) est séparée de la chambre d'amortisseur (11) par une plaque (13) munie d'orifices d'étranglement et/ou de soupapes d'étranglement (14, 15).

3. Unité ressort-amortisseur pneumatique selon la revendication 1 ou 2, **caractérisée en ce que** la chambre de ressort (9) et la chambre d'amortisseur (10) sont séparées l'une de l'autre par un fond de séparation (30) muni d'orifices d'étranglement et/ou de soupapes d'étranglement (31, 32).
